# EUROPÄISCHE PATENTSCHRIFT

(11) **EP 4 188 165 B1**
(45) Veröffentlichungstag und Bekanntmachung des Hinweises auf die Patenterteilung: **17.12.2025**
(21) Anmeldenummer: 21742394.6
(22) Anmeldetag: 12.07.2021
(51) Int. Cl.: A47J 31/40, A47J 31/60

(54) **VERFAHREN ZUM REINIGEN EINER VORRICHTUNG ZUM ZUFÜGEN VON GETRÄNKEZUSÄTZEN FÜR EINEN GETRÄNKEAUTOMATEN, INSBESONDERE EINER KAFFEEMASCHINE**
METHOD FOR CLEANING AN APPARATUS FOR ADDING BEVERAGE SUPPLEMENTS FOR A BEVERAGE MACHINE, IN PARTICULAR A COFFEE MACHINE
PROCÉDÉ DE NETTOYAGE D'UN APPAREIL DESTINÉ À L'AJOUT DE COMPLÉMENTS DE BOISSON POUR UNE MACHINE DE BOISSONS, EN PARTICULIER UNE MACHINE À CAFÉ

(30) Priorität: 29.07.2020 DE 102020119975
(43) Veröffentlichungstag der Anmeldung: 07.06.2023
(73) Patentinhaber: Melitta Professional Coffee Solutions GmbH & Co. KG, 32429 Minden (DE)
(72) Erfinder: BUCHHOLZ, Bernd, 32369 Rahden (DE); KÖNIG, Andreas, 32602 Vlotho (DE); THIELEMANN, Dennis, 32369 Rahden (DE)
(74) Vertreter: Specht, Peter
(86) Internationale Anmeldenummer: PCT/EP2021/069377
(87) Internationale Veröffentlichungsnummer: WO 2022/023017

(56) Entgegenhaltungen:
- WO-A1-2015/113580
- JP-A- 2019 097 833
- US-A1- 2018 235 397

## Beschreibung

Die vorliegende Erfindung betrifft ein Verfahren zum Reinigen einer Vorrichtung zum Zufügen von Getränkezusätzen für einen Getränkeautomaten, insbesondere einer Kaffeemaschine nach Anspruch 1.

Automatische Kaffeemaschinen, in denen Kaffeebohnen frisch gemahlen werden und das so hergestellte Kaffeepulver einer Brühkammer zugeführt wird, in der ein Kaffeegetränk gebrüht wird, sind aus dem Stand der Technik bekannt.

Derartige Kaffeemaschinen können auch mit Einrichtungen ausgestattet sein, durch die dem Kaffeegetränk Milch, insbesondere in Form von Milchschaum, zugeführt werden kann. Dadurch sind solche Kaffeemaschinen in der Lage, neben Kaffee und Espresso auch Kaffee-Milch-Mischgetränke, wie z.B. Milchkaffee, Cappuccino und Latte Macchiato usw. bereiten zu können.

Darüber hinaus sind Kaffeegetränke oder Kaffee-Milch-Mischgetränke bekannt, denen ein zusätzlicher Getränkezusatz - häufig in Form eines Sirups - zugefügt wird. Viel verwendet werden in diesem Zusammenhang Vanille-, Amaretto-, Haselnuss-, Karamell-, Zimt-, Mandel- oder Schokoladensirups. Denkbar sind auch alkoholische Getränkezusätze wie z.B. Obstbrände.

Diese Getränkezusätze werden den durch die Kaffeemaschine hergestellten Kaffeegetränken oder Kaffee-Milch-Mischgetränken entweder von Hand beigefügt oder durch eine dafür vorgesehene Vorrichtung je nach Bedarf automatisch zugefügt. Diese Vorrichtungen können dabei in die Kaffeemaschine integriert oder an die Kaffeemaschine adaptierbar ausgebildet sein.

Aus der JP 2019 097833 A ist ein Verfahren zur Reinigung einer Kaffeemaschine bekannt, mit zumindest folgende Verfahrensschritten:
- Bereitstellen der Kaffeemaschine, wobei der Getränkeautomat, insbesondere die Kaffeemaschine, wenigstens eine Wasserpumpe und einen über eine Leitung und ein Ventil mit der Wasserpumpe verbundenen Boiler und eine Getränkeausgabe aufweist sowie eine Vorrichtung zum Zufügen von Milch in den Kaffee. Dabei ist ein Milchbehälter über einen Schlauch und eine Pumpe mit einer Getränkeausgabe verbunden.
- Entfernen des Milchbehälters.
- Einsetzen eines nach oben hin offenen Behälters an die Stelle des Milchbehälters, so dass das freie Ende des Schlauches in den Behälter ragt.
- Befüllen des Behälters mit heißem Wasser aus dem Boiler bis der Schlauch ganz oder teilweise in das Wasser in dem Behälter eintaucht.
- In Betrieb setzen einer Pumpe und Fördern des heißen Wassers aus dem Behälter in und durch die Getränkeausgabe, so dass das heiße Wasser aus dieser austritt.

Eine weitere Kaffeemaschine mit einer Vorrichtung zum Zufügen von Getränkezusätzen zu einem Kaffee- oder Kaffee-Milch-Mischgetränk ist in der WO 2015 / 113580 A1 beschrieben.

Nachteilig an der technischen Lehre der WO 2015 / 113580 A1 ist, dass zur Reinigung der Leitungen, die die Aromastoffe dem fertig bereiteten Kaffee- oder Kaffee-Milch-Mischgetränk zuführen, zunächst sämtliche Aromastoff-Zuführleitungen aus der Vorrichtung demontiert werden müssen, um sie dann einem außerhalb von der Kaffeemaschine und der Vorrichtung stattfindenden Reinigungsprozess zu unterziehen. Dies ist in gastronomischen Betrieben hinderlich.

Ferner muss bei der WO 2015 / 113580 A1 das für den Reinigungsprozess der Vorrichtung erforderliche Wasser außerhalb der Vorrichtung und insbesondere außerhalb des Getränkeautomaten bzw. der automatischen Kaffeemaschine bereitet werden und auch gehandhabt werden. Dadurch entsteht eine Verbrühungsgefahr des Bedieners beim Hantieren mit dem heißen Wasser.

Ausgehend von der JP 2019 097833 A soll das Verfahren so weiterentwickelt werden, dass es auch gut für das Reinigen mehrerer Getränkezusatzbehälter nutzbar ist.

Diese Aufgabe wird durch ein Verfahren zur Reinigung einer Vorrichtung zum Zufügen von Getränkezusätzen eines Getränkeautomaten, insbesondere einer Kaffeemaschine gelöst, dass sich durch die Verfahrensschritte des Anspruchs 1 auszeichnet.

Dadurch wird in vorteilhafter Weise ein Verfahren zur Reinigung einer Vorrichtung zum Zufügen von Getränkezusätzen für einen Getränkeautomaten, insbesondere für eine Kaffeemaschine geschaffen, bei dem die zu reinigenden Elemente während der Reinigung in der Vorrichtung verbleiben. Besonders vorteilhaft ist auch, dass das heiße Wasser - vorzugsweise mit dem Reinigungsmittel - bei der Reinigung den jeweiligen Schlauch, die jeweilige Pumpe und die weiteren durchströmbaren Elemente optional einen weiteren Schlauch, einen Multilumenadapter und einen Multilumenschlauch und danach die Getränkeausgabe durchströmt. Dadurch werden vorteilhaft sämtliche Bauteile mit heißem Wasser gereinigt, die während des Betriebs der Vorrichtung zur Zuführung von Getränkezusätzen Aromastoffe führen. Der jeweilige Schlauch hinter der Pumpe und der Mulitilumenschlauch können auch zu einem Element zusammengefasst sein.

Es kann besonders vorteilhaft vorgesehen sein, dass das heiße Wasser zur Reinigung in einem geschlossenen, vorzugsweise während der Reinigung von außen nicht zugänglichen System automatisch, ohne Verbrühungsgefahr des Bedieners bereitgestellt wird.

Besonders vorteilhaft ist es, wenn die Verfahrensschritte a) bis e) in dieser Reihenfolge durchlaufen werden, wobei die Schritte d) und e) fortgesetzt werden können, bis eine genügende Reinigungswirkung erzielt worden ist. Nach dem Beenden des Befüllens wird dann noch die Wanne leer gefördert.

Es kann vorteilhaft vorgesehen sein, dass vor, bei oder nach dem Verfahrensschritt c) noch ein Eingeben eines Reinigungsmittels in den Behälter erfolgt. Dabei kann dieses Reinigungsmittel ein lösbarer Reiniger sein aber auch beispielsweise ein flüssiger Reiniger, der den Reinigungsprozess optimiert und zu einer besonders gründlichen Reinigung führt.

In einer weiteren besonders bevorzugten Ausführungsvariante der Erfindung wird nach dem Verfahrensschritt e) der folgende Verfahrensschritt automatisch ausgeführt: Ausschalten der Kaffeemaschine und der Vorrichtung zum Zufügen von Getränkezusätzen. Dadurch kann das Reinigungsverfahren automatisch beendet werden.

Dabei ist nach einer weiteren Variante denkbar, dass das Gehäuse der Vorrichtung zum Zufügen von Getränkezusätzen eine verschließbare Tür aufweist und das nach dem Verfahrensschritt c) und vor dem Schritt d) der folgende weitere Verfahrensschritt ausgeführt wird: Schließen der Tür der Vorrichtung zum Zufügen von Getränkezusätzen. Dadurch wird eine wirksame Sicherheitseinrichtung geschaffen, die verhindert, dass sich ein Bediener mit heißem Wasser zur Reinigung verbrühen kann. Insoweit kann das Gehäuse bis auf die Tür auch vorteilhaft geschlossen ausgebildet sein.

Weiterhin vorteilhaft ist, wenn die Getränkezusatzbehälter nach einer Ausführungsvariante in ein Halteelement eingestellt sind. Dieses kann trägerartig ausgebildet sein, so dass es als Ganzes mit den Getränkezusatzbehältern aus dem Gehäuse entnehmbar und wieder in dieses einstellbar ist.

Dabei kann weiter vorteilhaft vorgesehen sein, dass das Haltelement mehrere Fächer aufweist und jedes Fach einen der Getränkezusatzbehälter aufnimmt. Dadurch sind die Getränkezusatzbehälter vorteilhaft sicher im Gehäuse der Vorrichtung zum Zufügen von Getränkezusätzen gehalten und lassen sich ebenso vorteilhaft schnell und einfach mit einem einzigen Handgriff aus dem Gehäuse entfernen.

Vorteilhaft ist auch, wenn nach einer Variante das Wasser aus dem Boiler eine Temperatur über 65°C aufweist. Dadurch ergibt sich ein besonders gründlicher Reinigungseffekt des Wassers.

Es kann weiter nach einer Variante vorgesehen sein, dass ein Zeitintervall für die Reinigung der Vorrichtung zum Zufügen von Getränkezusätzen durch eine Steuerung einstellbar ist. Dadurch kann die Dauer des Ablaufs und der Zeitpunkt des Reinigungsverfahrens individuell gewählt werden und je nach verwendeten Getränkezusätzen ein optimales Reinigungsergebnis erzielt werden.

Es kann auch vorgesehen sein, dass sich die Pumpen und die Schläuche z.B. motorgetrieben mit einem Antrieb oder manuell als Einheit anheben und absenken lassen, was den Betrieb - beispielsweise ein Wechseln der Getränkebehälter -und/oder das Reinigen vereinfachen kann.

Weitere vorteilhafte Ausführungsformen der Erfindung sind den Unteransprüchen zu entnehmen.

Nachfolgend wird die Erfindung anhand eines Ausführungsbeispiels unter Bezug auf die Figuren näher beschrieben. Die Erfindung ist nicht auf dieses Ausführungsbeispiel beschränkt, sondern kann im Rahmen der Ansprüche auch auf andere Weise oder äquivalent umgesetzt werden. Es zeigen:
- Figur 1:: eine schematische Darstellung einer automatischen Kaffeemaschine mit einer Vorrichtung zum Zufügen von Getränkezusätzen im Betrieb;
- Figur 2:: die Kaffeemaschine aus Fig. 1 während eines Reinigungsprozesses der Vorrichtung zum Zufügen von Getränkezusätzen;
- Figur 3:: eine schematische Darstellung einer Variante der automatischen Kaffeemaschine aus Fig. 1.

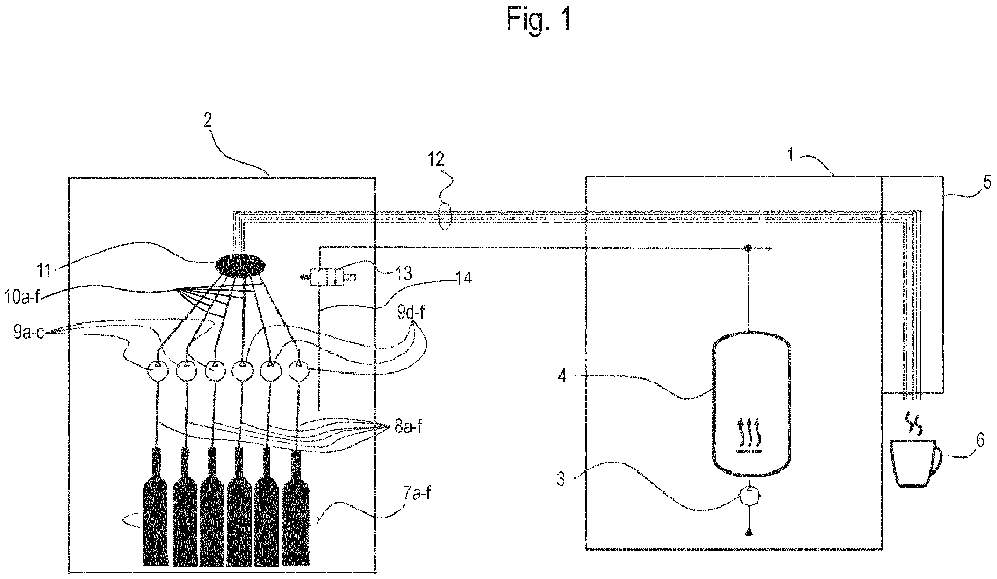

In Figur 1 ist ein Getränkeautomat schematisch im Betrieb dargestellt, der hier insbesondere als automatische Kaffeemaschine 1 ausgebildet ist. Der Getränkeautomat kann beispielsweise auch als automatische Teebereitungsmaschine ausgebildet sein. Die automatische Kaffeemaschine 1 weist eine Vorrichtung 2 zum Zufügen von Getränkezusätzen wie beispielsweise Aromastoffen auf.

Von der Kaffeemaschine 1 sind hier eine Wasserpumpe 3 und deren Zuleitung, ein stromabwärts zur Wasserpumpe 3 angeordneter und mit der Wasserpumpe 3 in Wirkverbindung stehender Boiler 4, eine zentrale Getränkeausgabe 5 sowie ein unter der zentralen Getränkeausgabe 5 platziertes Trinkgefäß 6 für ein Getränk schematisch dargestellt.

Die Vorrichtung 2 zum Zufügen von Getränkezusätzen kann ein Gehäuse aufweisen, welches hier schematisch als Rechteck angedeutet ist. Dieses Gehäuse kann integral mit einem Gehäuse der Kaffeemaschine 1 ausgebildet sein, dass hier ebenfalls rein schematisch als Rechteck angedeutet ist.

Die Vorrichtung 2 zum Zufügen von Getränkezusätzen kann ferner eine Tür, insbesondere eine festverschließbare Tür (hier nicht dargestellt), aufweisen.

In das Gehäuse 20 sind einer oder mehrere Getränkezusatzbehälter 7 - hier beispielhaft sechs Getränkezusatzbehälter 7a bis 7f- eingestellt. Jeder Getränkezusatzbehälter 7a bis 7f kann mit einem unterschiedlichen fließfähigen Getränkezusatz gefüllt sein. Bei den Getränkezusätzen kann es sich um Sirups handeln, alternativ sind auch alkoholische Aromastoffe, wie z.B. Obstbrände oder auch andere Getränkezusätze. Viel verwendet werden in diesem Zusammenhang Vanille-, Amaretto-, Haselnuss-, Karamell-, Zimt-, Mandel- und/oder Schokoladensirups. Ein Halteelement (hier nicht dargestellt), in das der oder die Getränkezusatzbehälter 7 eingestellt sind, kann mehrere Fächer aufweisen, wobei jedes Fach einen der Getränkezusatzbehälter 7 aufnehmen kann. Dadurch sind die Getränkezusatzbehälter 7 sicher in der Vorrichtung 2 gehalten und können einfach ausgetauscht werden, in dem das Haltelement mit den eingestellten Getränkezusatzbehältern 7 aus der Vorrichtung 2 herausgezogen wird, woraufhin dann der oder die Getränkezusatzbehälter 7 gewechselt wird/ werden.

Jeder Getränkezusatzbehälter 7a bis 7f ist jeweils durch einen ihm zugeordneten Schlauch 8a bis 8f - wobei die dann mehreren Schläuche hier jeweils einen Saugschlauch bilden - mit einer Pumpe 9a bis 9f verbunden. Jeder der Pumpen 9a bis 9f kann jeweils ein weiterer Schlauch 10a bis 10f zugeordnet sein. Es kann dann weiter vorteilhaft und einfach vorgesehen sein, dass jeder der Schläuche 10a - 10f mit einem Multilumenadapter 11 verbunden ist.

Die Pumpen 9a bis 9f können an einem vorzugsweise vertikalen geführten Auszug (hier nicht dargestellt) angebracht sein. Die Pumpen 9a bis 9f und die Schläuche 8a bis 8f lassen sich beispielsweise derart - vorteilhaft und einfach - anheben und absenken. Dadurch können die Schläuche 8a bis 8f aus den Getränkezusatzbehältern 7a bis 7f herausbewegt werden. Dadurch kann auch ein einfacher Austausch der Getränkezusatzbehälter 7a bis 7f möglich, ohne einen Schlauch 8a bis 8f berühren zu müssen.

An den Multilumenadapter 11 kann ein Multilumenschlauch 12 angeschlossen sein, der mit der zentralen Getränkeausgabe 5 der Kaffeemaschine 1 verbunden sein kann. Bei dem Multilumenschlauch 12 handelt es sich hier um einen Multilumenschlauch 12 mit mehreren -hier beispielhaft sechs- Einzelleitungen, so dass für jeden Getränkezusatz eine separate Leitung in dem Multilumenschlauch 12 vorgesehen sein kann.

Die Bündelung der einzelnen Aromastoff-Leitungen in dem Multilumenschlauch 12 hat den Vorteil, dass dieser bei der Montage einfacher als mehrere Einzelschläuche durch die Kaffeemaschine 1 geführt werden kann.

Außerdem ist der benötigte Bauraum für den Multilumenschlauch 12 kleiner als für eine entsprechende Anzahl von Einzelschläuchen, so dass der Multilumenschlauch 12 problemlos durch die zentrale Getränkeausgabe 5 der Kaffeemaschine 1 führbar ist. Außerdem ist der Multilumenschlauch 12 besser geeignet, translatorische Bewegungen in zwei Richtungen dauerhaft auszuhalten.

Die Kaffeemaschine 1 mit der Vorrichtung 2 zum Zufügen von Getränkezusätzen arbeitet beispielsweise wie folgt: Zunächst wird vom Bediener das gewünschte Kaffeegetränk oder Kaffee-Milch-Mischgetränk mit dem gewünschten Getränkezusatz z.B. an einem Display mit Touchscreen, das an der Kaffeemaschine angebracht sein kann und mit der Steuerung zusammenwirkt, ausgewählt. Danach wird zunächst das gewünschte Kaffeegetränk oder Kaffee-Milch-Mischgetränk durch die Kaffeemaschine 1 zubereitet und über die zentrale Getränkeausgabe 5 in das bereitgestellte Gefäß 6 gefüllt. Anschließend oder währenddessen wird die jeweilige Pumpe 9a bis 9f in Betrieb gesetzt und über den jeweiligen Schlauch 8a bis 8f ein definiertes Volumen des gewünschten Getränkezusatzes aus dem jeweiligen Getränkezusatzbehälter 7a bis 7f entnommen und über den jeweiligen Schlauch 10a bis 10f über den Multilumenadapter 11 und den Multilumenschlauch 12 in die zentrale Getränkeausgabe 5 gefördert und dem Kaffeegetränk oder dem Kaffee-Milch-Mischgetränk im Gefäß 6 zugefügt.

Die Vorrichtung 2 zum Zufügen von Getränkezusätzen kann ein Ventil 13 aufweisen, das hier als extern -z.B. durch eine Steuerung- aktuierbares 2/2 Wegeventil ausgeführt ist. Das Ventil 13 ist über eine Leitung mit dem Boiler 4 der Kaffeemaschine 1 verbunden. An dem Ventil 13 ist stromabwärts eine weitere Leitung 14 angeschlossen, die für eine Reinigungsfunktion der Vorrichtung 2 zum Zufügen von Getränkezusätzen vorgesehen ist, welche im Folgenden noch genauer erläutert wird.

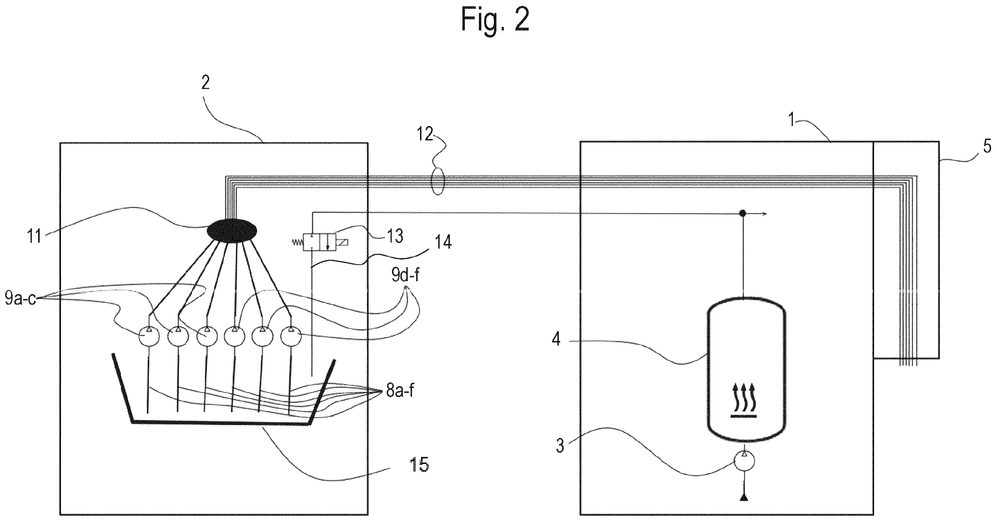

In Figur 2 ist die Vorrichtung 2 zum Zufügen von Getränkezusätzen während eines Reinigungsvorgangs dargestellt. Zum Zwecke der Reinigung der Vorrichtung 2 zum Zufügen von Getränkezusätzen sind die mit jeweils einem bestimmten Getränkezusatz gefüllten - vorzugsweise als Flaschen ausgebildeten - Getränkezusatzbehälter 7a bis 7f vorzugsweise gemeinsam mit dem Halteelement, in das die Getränkezusatzbehälter 7a bis 7f eingestellt sind, aus der Vorrichtung 2 entfernt worden. Dementsprechend ist der jeweilige Schlauch 8a bis 8f nicht mehr mit dem jeweiligen Getränkezusatzbehälter 7a bis 7f verbunden, sondert mündet jeweils frei bzw. mit einem freien Ende. Als Reservoir für heißes Wasser, das zum Reinigen der Vorrichtung 2 zum Zufügen von Getränkezusätzen vorgesehen ist, ist an die Stelle der Getränkezusatzbehälter 7a bis 7f ein Behälter 15, hier beispielhaft eine nach oben offene Schale, in die Vorrichtung 2 eingesetzt worden. In den Behälter 15 wird vom Bediener ein insbesondere in Wasser lösbares Reinigungsmittel gegeben. Das Reinigungsmittel kann pulverförmig, flüssig oder als Tablette oder Tab beschaffen- oder ausgebildet sein. Die freien Enden der Schläuche werden und sind dann in den Behälter 15 eingelegt.

Zur Reinigung der Vorrichtung 2 zum Zufügen von Getränkezusätzen wird die Tür der Vorrichtung 2 geschlossen. Der Zustand der Tür (geschlossen/offen) kann überwacht werden. Es wird nun heißes Wasser aus dem Boiler 4 der Kaffeemaschine 1 über das geöffnete Ventil 13 und die Leitung 14 in den Behälter 15 gefüllt, bis die Enden oder die Schläuche 8a bis 8f zum weiteren Teil mindestens in das Wasser in dem Behälter 15 eintauchen. Das Wasser aus dem Boiler 4 kann eine Temperatur über 60°C aufweisen, wie es zur Bereitung von Getränken, insbesondere Kaffeegetränken, üblicherweise verwendet wird.

Durch die Verwendung von heißem Wasser im Inneren der Vorrichtung 2 zum Zufügen von Getränkezusätzen sowie durch die verschließbare Tür kann dieses ohne Gefahr für einen Bediener eine hohe Temperatur aufweisen. Ob Wasser aus dem Wasserhahn mit 60°C bis 65°C verwendet wird oder über 80°C heißes Wasser aus dem Boiler 4 der Kaffeemaschine 1, macht für die Gründlichkeit der Reinigung der Vorrichtung 2 zum Zufügen von Getränkezusätzen einen erheblichen Unterschied.

Nun werden die Pumpen 9a bis 9f in Betrieb gesetzt. Dies kann je Pumpe 9a bis 9f einzeln, in Gruppen von mehreren Pumpen 9a bis 9f oder vorzugsweise für alle Pumpen 9a bis 9f gleichzeitig erfolgen.

Das heiße Wasser aus dem Behälter 15 durchströmt nun den jeweiligen Schlauch 8a bis 8f, die jeweilige Pumpe 9a bis 9f, den Multilumenadapter 11 sowie den Multilumenschlauch 12, um dann in der zentralen Getränkeausgabe 5 auszutreten und dort von einer dazu vorgesehenen Wanne (hier nicht dargestellt) aufgefangen zu werden und / oder von dort in den Abfluss geleitet zu werden.

Ein Zeitintervall für die Reinigung der Vorrichtung 2 zum Zufügen von Getränkezusätzen kann durch die Steuerung fest vorgegeben sein. Während der Reinigung wird der Behälter 15 kontinuierlich mit heißem Wasser aus dem Boiler 4 aufgefüllt. Das aus dem Boiler 4 dadurch entnommene heiße Wasser wird durch die Wasserpumpe 3 kontinuierlich in den Boiler 4 nachgefördert und durch den Boiler 4 erhitzt.

Dadurch wird ein Verfahren zur Reinigung der Vorrichtung 2 zum Zufügen von Getränkezusätzen für eine Kaffeemaschine geschaffen, bei dem die zu reinigenden Elemente während der Reinigung in der Vorrichtung 2 verbleiben. Die Reinigung der Vorrichtung 2 zum Zufügen von Getränkezusätzen muss zwar durch den Bediener vorbereitet werden, es ist aber vorgesehen, dass die Reinigung der Vorrichtung 2 zum Zufügen von Getränkezusätzen dann nach Schließen der Tür der Vorrichtung 2 vollautomatisch abläuft. Die Kaffeemaschine 1 und die Vorrichtung 2 zum Zufügen von Getränkezusätzen können sich -sofern gewünscht- nach Abschluss der Reinigung der Vorrichtung 2 automatisch vollständig ausschalten.

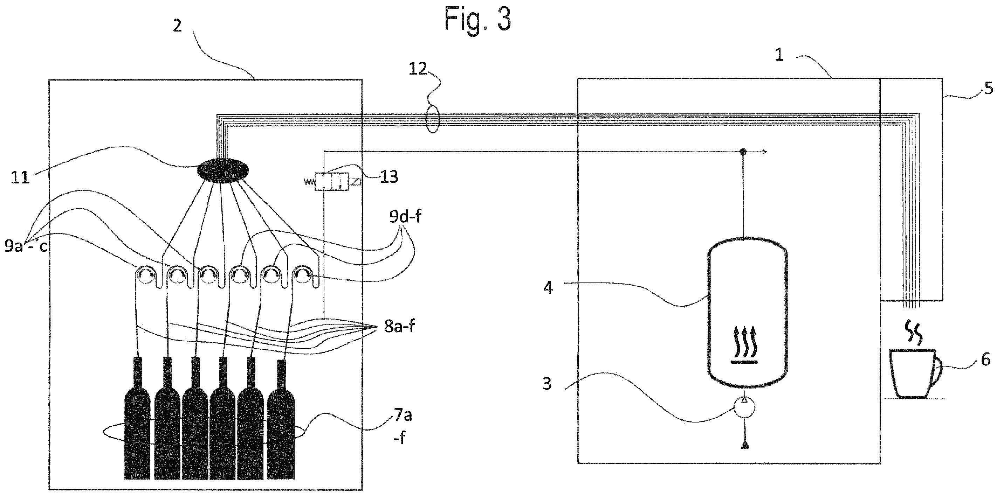

Nach der besonders einfachen und kostengünstigen Variante der Fig. 3 wird jeweils ein durchgehender Schlauch 8a - f von den als Flaschen ausgebildeten Getränkezusatzbehältern 7a-f direkt zum Multilumenadapter 11 geführt. Dazu sind die Pumpen 9a-9f der Schläuche 8a-f jeweils als Schlauchpumpen ausgebildet. Ansonsten kann die Variante der Fig. 3 wie die der Fig. 1 und 2 ausgebildet sein und arbeiten.

### Bezugszeichenliste

- 1: Kaffeemaschine
- 2: Vorrichtung zum Zufügen von Getränkezusätzen
- 3: Wasserpumpe
- 4: Boiler
- 5: zentrale Getränkeausgabe
- 6: Trinkgefäß
- 7a - f: Getränkezusatzbehälter
- 8a - f: Schlauch
- 9a - f: Pumpe
- 10a - f: Schlauch
- 11: Multilumenadapter
- 12: Multilumenschlauch
- 13: Ventil
- 14: Leitung
- 15: Behälter

## Patentansprüche

1. Verfahren zur Reinigung einer Vorrichtung (2) zum Zufügen von Getränkezusätzen, insbesondere Aromastoffen, eines Getränkeautomaten, insbesondere einer Kaffeemaschine (1), umfassend zumindest folgende Verfahrensschritte:
a) Bereitstellen des Getränkeautomaten, insbesondere einer Kaffeemaschine (1), wobei der Getränkeautomat, insbesondere die Kaffeemaschine (1), wenigstens eine Wasserpumpe (3) und einen über eine Leitung und ein Ventil (13) mit der Wasserpumpe (3) verbundenen Boiler (4) und eine Getränkeausgabe (5) aufweist sowie eine Vorrichtung (2) zum Zufügen von Getränkezusätzen in jeweilige mit dem Getränkeautomaten, insbesondere der Kaffeemaschine (1), zubereitete Getränke, wobei die Vorrichtung (2) zum Zufügen von Getränkezusätzen ein Gehäuse aufweist, in das mehrere Getränkezusatzbehälter (7a- 7f) eingestellt sind, die jeweils mit einem Getränkezusatz gefüllt sind, wobei jeder Getränkezusatzbehälter (7a - f) über einen jeweiligen Schlauch (8a - f) und eine jeweilige Pumpe (9a - f) über weitere durchströmbare Elemente, die jeweils optional einen weiteren Schlauch (10a-f), umfassen sowie einen Multilumenadapter (11) und einen Multilumenschlauch (12), mit einer Getränkeausgabe (5) verbunden ist.
b) Entfernen der Getränkezusatzbehälter (7a bis 7f) aus der Vorrichtung (2) zum Zufügen von Getränkezusätzen;
c) Einsetzen eines Behälters, insbesondere eines nach oben hin offenen Behälters, (15) an die Stelle der Getränkezusatzbehälter (7a bis 7f), so dass die freien Enden der Schläuche (8a-f) in den Behälter ragen;
d) Befüllen des Behälters (15) mit heißem Wasser aus dem Boiler (4) über das geöffnete Ventil (13) und die Leitung (14) bis die Schläuche (8a bis 8f) ganz oder teilweise in das Wasser in dem Behälter (15) eintauchen;
e) In Betrieb setzen der Pumpen (9a bis 9f) und Fördern des heißen Wassers aus dem Behälter in und durch die Getränkeausgabe (5), so dass das heiße Wasser aus dieser austritt,
f) **dadurch gekennzeichnet dass**, das heiße Wasser bei der Reinigung den jeweiligen Schlauch (8a bis 8f), die jeweilige Pumpe (9a bis 9f) und die weiteren durchströmbaren Elemente - umfassend optional den weiteren Schlauch (10a -f), den Multilumenadapter (11) und den Multilumenschlauch (12) - und danach die Getränkeausgabe (5) durchströmt.

2. Verfahren nach Anspruch 1, **dadurch gekennzeichnet, dass** die Verfahrensschritte a) bis e) in dieser Reihenfolge durchlaufen werden und dass die Schritte d) und e) während der Reinigung weiter fortgesetzt werden.

3. Verfahren nach Anspruch 1 oder 2, **dadurch gekennzeichnet, dass** nach dem Verfahrensschritt e) der folgende Verfahrensschritt ausgeführt wird:
- Ausschalten der Kaffeemaschine (1) und der Vorrichtung (2) zum Zufügen von Getränkezusätzen.

4. Verfahren nach einem der vorgenannten Ansprüche, **dadurch gekennzeichnet, dass** das Gehäuse der Vorrichtung (2) zum Zufügen von Getränkezusätzen eine verschließbare Tür aufweist und dass nach dem Verfahrensschritt c) und vor dem Schritt d) der folgende Verfahrensschritt ausgeführt wird:
- Schließen der Tür der Vorrichtung (2) zum Zufügen von Getränkezusätzen.

5. Verfahren nach einem der vorgenannten Ansprüche, **dadurch gekennzeichnet, dass** vor, bei oder nach dem Verfahrensschritt c) ein Eingeben eines Reinigungsmittels in den Behälter (15) erfolgt.

6. Verfahren nach einem der vorgenannten Ansprüche, **dadurch gekennzeichnet, dass** das heiße Wasser, nach dem es aus der zentralen Getränkeausgabe (5) ausgetreten ist, von einer dazu vorgesehenen Wanne aufgefangen wird und / oder in einen Abfluss geleitet wird.

7. Verfahren nach einem der vorgenannten Ansprüche, **dadurch gekennzeichnet, dass** die Getränkezusatzbehälter (7) in ein aus dem Gehäuse entnehmbares Halteelement eingestellt sind.

8. Verfahren nach Anspruch 7, **dadurch gekennzeichnet, dass** das Haltelement mehrere Fächer aufweist und jedes Fach einen Getränkezusatzbehälter (7) aufnimmt.

9. Verfahren nach einem der vorgenannten Ansprüche, **dadurch gekennzeichnet, dass** das Wasser aus dem Boiler (4) eine Temperatur über 60°C aufweist.

10. Verfahren nach einem der vorgenannten Ansprüche, **dadurch gekennzeichnet, dass** ein Zeitintervall für die Reinigung der Vorrichtung (2) zum Zufügen von Getränkezusätzen durch eine Steuerung fest vorgegeben ist.

## Claims

1. Method for cleaning a device (2) for adding beverage additives, in particular flavorings, to a beverage dispenser, in particular a coffee machine (1), comprising at least the following method steps of:
a. providing the beverage dispenser, in particular a coffee machine (1), wherein the beverage dispenser, in particular the coffee machine (1), has at least one water pump (3) and a boiler (4) connected to the water pump (3) via a conduit and a valve (13), and a beverage dispensing unit (5), as well as a device (2) for adding beverage additives to respective beverages prepared with the beverage dispenser, in particular the coffee machine (1), wherein the device (2) for adding beverage additives comprises a housing in which a plurality of beverage additive containers (7a-7f) are inserted, each of which is filled with a beverage additive, wherein each beverage additive container (7a-f) is connected via a respective hose (8a-f) and a respective pump (9a-f) via further flow-through elements, each of which optionally comprises a further hose (10a-f), as well as a multi-lumen adapter (11) and a multi-lumen hose (12), to a beverage dispensing unit (5);
b. removing the beverage additive containers (7a to 7f) from the device (2) for adding beverage additives;
c. inserting a container, in particular an upwardly open container (15), in place of the beverage additive containers (7a to 7f) so that the free ends of the hoses (8a-f) protrude into the container;
d. filling the container (15) with hot water from the boiler (4) via the open valve (13) and the conduit (14) until the hoses (8a to 8f) are completely or partially immersed in the water in the container (15);
e. starting up the pumps (9a to 9f) and conveying the hot water from the container into and through the beverage dispensing unit (5) so that the hot water emerges from it,
f. **characterized in that**, during cleaning, the hot water flows through the respective hose (8a to 8f), the respective pump (9a to 9f) and the other flow-through elements - optionally including the other hose (10a-f), the multi-lumen adapter (11) and the multi-lumen hose (12) - and then the beverage dispensing unit (5).

2. Method according to claim 1, **characterized in that** the method steps a) to e) are carried out in this order and that steps d) and e) are further continued during cleaning.

3. Method according to claim 1 or 2, **characterized in that,** after method step e), the following method step is performed:
- switching off the coffee machine (1) and the device (2) for adding beverage additives.

4. Method according to one of the preceding claims, **characterized in that** the housing of the device (2) for adding beverage additives has a closable door and **in that** after method step c) and before step d), the following method step is performed:
- closing the door of the device (2) for adding beverage additives.

5. Method according to one of the preceding claims, **characterized in that** an introduction of a cleaning agent into the container (15) is carried out before, during, or after method step c).

6. Method according to one of the preceding claims, **characterized in that** the hot water, after it has exited the central beverage dispensing unit (5), is collected by a tray provided for this purpose and/or is directed into a drain.

7. Method according to one of the preceding claims, **characterized in that** the beverage additive containers (7) are placed in a retaining element that can be removed from the housing.

8. Method according to claim 7, **characterized in that** the retaining element has a plurality of compartments and each compartment accommodates one beverage additive container (7).

9. Method according to one of the preceding claims, **characterized in that** the water from the boiler (4) has a temperature above 60°C.

10. Method according to one of the preceding claims, **characterized in that** a time interval for cleaning the device (2) for adding beverage additives is fixedly predetermined by a control system.

## Revendications

1. Procédé pour le nettoyage d'un dispositif (2) pour l'ajout d'additifs pour boissons, en particulier d'arômes, dans un distributeur de boissons automatique, en particulier une machine à café (1), comprenant au moins les étapes de procédé suivantes :
a) préparation du distributeur de boissons automatique, en particulier d'une machine à café (1), lequel distributeur de boissons automatique, en particulier machine à café (1), comprend au moins une pompe à eau (3) et une bouilloire (4) reliée par une conduite et une vanne (13) à la pompe à eau (3) et une sortie de boissons (5), ainsi qu'un dispositif (2) pour l'ajout d'additifs pour boissons dans des boissons préparées avec le distributeur de boissons automatique, en particulier la machine à café (1), lequel dispositif (2) pour l'ajout d'additifs pour boissons comprend un coffre dans lequel sont installés plusieurs réservoirs d'additif pour boissons (7a-7f) qui sont remplis chacun d'un additif pour boissons, chaque réservoir d'additif pour boissons (7a-f) étant relié à une sortie de boissons (5) par un flexible (8a-f) respectif et une pompe (9a-f) respective, via plusieurs éléments pouvant acheminer un écoulement qui comprennent chacun facultativement un autre flexible (10a-f), et via un adaptateur multi-lumières (11) et un flexible multi-lumières (12) ;
b) retrait des réservoirs d'additif pour boissons (7a à 7f) du dispositif (2) pour l'ajout d'additifs pour boissons ;
c) insertion d'un récipient, en particulier d'un récipient (15) ouvert vers le haut, à la place des réservoirs d'additif pour boissons (7a à 7f), de sorte que les extrémités libres des flexibles (8a-f) dépassent dans le récipient ;
d) remplissage du récipient (15) avec de l'eau chaude provenant de la bouilloire (4) via la vanne (13) ouverte et la conduite (14), jusqu'à ce que les flexibles (8a à 8f) plongent complètement ou en partie dans l'eau contenue dans le récipient (15) ;
e) mise en service des pompes (9a à 9f) et acheminement de l'eau chaude provenant du récipient dans et à travers la sortie de boissons (5), de sorte que l'eau chaude sorte par celle-ci,
f) **caractérisé en ce que** l'eau chaude parcourt, lors du nettoyage de chaque flexible (8a à 8f), la pompe (9a à 9f) correspondante et les autres éléments pouvant acheminer l'écoulement, qui comprennent facultativement l'autre flexible (10a -f), l'adaptateur multi-lumières (11) et le flexible multi-lumières (12), et ensuite la sortie de boissons (5).

2. Procédé selon la revendication 1, **caractérisé en ce que** les étapes de procédé a) à e) sont exécutées dans cet ordre et **en ce que** les étapes d) et e) se poursuivent pendant le nettoyage.

3. Procédé selon la revendication 1 ou 2, **caractérisé en ce que** l'étape de procédé suivante est exécutée après l'étape de procédé e) :
- arrêt de la machine à café (1) et du dispositif (2) pour l'ajout d'additifs pour boissons.

4. Procédé selon l'une des revendications précédentes, **caractérisé en ce que** le coffre du dispositif (2) pour l'ajout d'additifs pour boissons comporte une porte refermable et **en ce que**, après l'étape de procédé c) et avant l'étape d), l'étape de procédé suivante est exécutée :
- fermeture de la porte du dispositif (2) pour l'ajout d'additifs pour boissons.

5. Procédé selon l'une des revendications précédentes, **caractérisé en ce qu'**un produit nettoyant est introduit dans le récipient (15) avant, pendant ou après l'étape de procédé c).

6. Procédé selon l'une des revendications précédentes, **caractérisé en ce que** l'eau chaude, après être sortie par la sortie de boissons centrale (5), est recueillie dans un bac prévu à cette fin et/ou envoyée à l'égout.

7. Procédé selon l'une des revendications précédentes, **caractérisé en ce que** les réservoirs d'additif pour boissons (7) sont installés dans un élément de maintien qui peut être retiré du coffre.

8. Procédé selon la revendication 7, **caractérisé en ce que** l'élément de maintien comporte plusieurs compartiments et chaque compartiment reçoit un réservoir d'additifs pour boissons (7).

9. Procédé selon l'une des revendications précédentes, **caractérisé en ce que** l'eau provenant de la bouilloire (4) est à une température supérieure à 60 °C.

10. Procédé selon l'une des revendications précédentes, **caractérisé en ce qu'**un intervalle de temps pour le nettoyage du dispositif (2) pour l'ajout d'additifs pour boissons est fixé par une unité de commande.
